# FASCICULE DE BREVET EUROPEEN

(11) **EP 1 784 312 B1**
(45) Date de publication et mention de la délivrance du brevet: **05.11.2008**
(21) Numéro de dépôt: 05792223.9
(22) Date de dépôt: 22.07.2005
(51) Int. Cl.: B60J 5/06

(54) **VEHICULE AUTOMOBILE COMPRENANT UNE PORTE COULISSANTE ET DES MOYENS POUR RETENIR LA PORTE COULISSANTE EN CAS D'IMPACT**
KRAFTFAHRZEUG MIT EINER SCHIEBETÜR UND MITTEL ZUM ZURÜCKHALTEN DER SCHIEBETÜR BEI ZUSAMMENSTOSS
MOTOR VEHICLE COMPRISING A SLIDING DOOR AND MEANS FOR RETAINING THE SLIDING DOOR UPON IMPACT

(30) Priorité: 30.08.2004 FR 0409193
(43) Date de publication de la demande: 16.05.2007
(73) Titulaire: PEUGEOT CITROËN AUTOMOBILES S.A., 78140 Vélizy Villacoublay (FR)
(72) Inventeur: COLLOT, Mathieu, F-92140 Clamart (FR); MORIN, Michel, F-91430 Vauhallan (FR)
(86) Numéro de dépôt international: PCT/FR2005/050609
(87) Numéro de publication internationale: WO 2006/027510

(56) Documents cités:
- EP-A- 1 110 781
- US-A- 4 560 197
- US-A- 5 322 339
- US-A1- 2003 071 484
- US-B1- 6 244 652
- PATENT ABSTRACTS OF JAPAN vol. 012, no. 218 (M-711), 22 juin 1988 (1988-06-22) & JP 63 017113 A (DAIHATSU MOTOR CO LTD), 25 janvier 1988 (1988-01-25)

## Description

La présente invention concerne un véhicule automobile comprenant :
- une caisse présentant une ouverture d'accès à l'intérieur du véhicule ;
- une porte permettant de fermer l'ouverture d'accès, la porte étant montée à coulissement sur la caisse entre une position fermée et une position ouverte ;
- la porte étant montée à coulissement par l'intermédiaire d'un rail et d'au moins un organe de guidage apte à coulisser le long du rail suivant la direction d'extension du rail, le rail étant solidaire de l'une de la caisse et de la porte, et l'organe de guidage étant solidaire de l'autre de la caisse et de la porte. Un véhicule automobile selon le préambule de la revendication 1 est connu de EP 1110781.

Lorsque un véhicule automobile subit un impact au niveau d'une porte latérale, cette dernière se déforme et est entraînée vers l'intérieur du véhicule. La porte latérale n'est retenue que par ses moyens d'articulation sur la caisse.

Afin de limiter l'intrusion de la porte latérale dans l'habitacle, des dispositifs de retenue supplémentaires peuvent être disposés entre la porte latérale et la caisse du véhicule automobile.

Les documents US 4,462,633, US 4,451,078, US 4,307,911 et US 4,438,969 décrivent des dispositifs de retenue pour des portes latérales pivotantes de véhicule automobile. Ces dispositifs comprennent chacun un doigt de retenue fixé sur la porte latérale et s'engageant, lorsque la porte latérale est fermée, dans une encoche correspondante prévue sur la caisse.

Cependant, ces dispositifs sont mal adaptés pour les véhicules munis de portes coulissantes.

Un but de la présente invention est de fournir un véhicule automobile muni d'une porte coulissante et comprenant des moyens pour retenir la porte en cas d'impact subi au niveau de la porte.

A cet effet, la présente invention concerne un véhicule du type précité, caractérisé en ce qu'il comprend :
- un organe de retenue fixé sur l'élément parmi la caisse et la porte portant l'organe de guidage,
- l'organe de retenue étant apte, en position fermée de la porte, à venir en prise avec le rail pour retenir la porte par rapport à la caisse lors de la déformation de la porte selon une première direction transversale à la direction d'extension du rail en cas d'impact subi par la porte ;
- l'organe de retenue étant espacé du rail lorsque la porte n'est pas déformée, et apte à se déplacer par rapport au rail selon une deuxième direction sensiblement transversale à la direction d'extension du rail et à la première direction pour permettre l'ouverture et la fermeture de la porte.

Selon des modes de réalisation particuliers, le véhicule peut comprendre l'une ou plusieurs des caractéristiques suivantes, prise(s) isolément ou selon toutes les combinaisons techniquement possibles :
- l'organe de retenue présente au moins un crochet apte à s'accrocher sur un bord du rail ;
- le crochet comprend une branche s'étendant, en position fermée de la porte, en direction du rail, la branche comprenant au moins une saillie d'accrochage susceptible de s'accrocher sur le bord du rail ;
- l'organe de retenue est fixé sur la périphérie de la porte ;
- l'organe de retenue est agencé pour empêcher un mouvement de la périphérie de la porte vers l'intérieur de la porte ;
- le rail comprend au moins une aile s'étendant, en position fermée de la porte, en direction l'organe de retenue, l'aile étant munie à son extrémité libre d'un rebord sur lequel l'organe de retenue est susceptible de s'accrocher ;
- le rail présente un profil ouvert en direction de la porte et, en position fermée de la porte, l'organe de retenue s'engage au moins en partie à l'intérieur du rail.

L'invention sera mieux comprise à l'étude de la description suivante, donnée uniquement à titre d'exemple et faite en se référant aux dessins annexés sur lesquels :
- la figure 1 est une vue schématique de dessus d'un véhicule automobile muni de portes latérales coulissantes ;
- la figure 2 est une vue schématique de côté du véhicule de la figure 1 montrant un flanc droit du véhicule, et en particulier une porte latérale droite ;
- la figure 3 est une vue en perspective montrant la face intérieure de la porte latérale droite et des organes de retenue ;
- la figure 4 est une vue en coupe transversale du véhicule montrant le bord inférieur de la porte latérale droite et illustrant un organe de retenue de la porte latérale et la liaison à coulissement entre la porte et la caisse du véhicule ; et
- la figure 5 est une vue analogue à la figure 4 illustrant la porte latérale droite et l'organe de retenue après un impact.

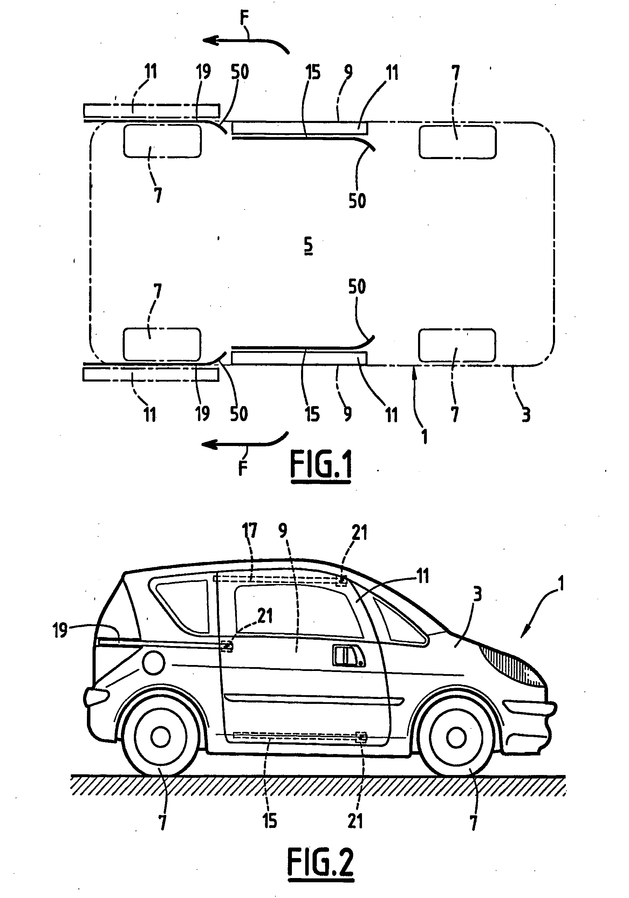

Sur la figure 1, un véhicule 1 comprend une caisse 3 délimitant un habitacle intérieur 5. La caisse 3 repose sur le sol par l'intermédiaire de quatre roues référencées 7.

Dans tout ce qui suit, les orientations utilisées sont des orientations habituelles d'un véhicule automobile. Ainsi, les termes « avant », « arrière », « droite », « gauche », « supérieur », « inférieur », « horizontal » et « vertical » s'entendent par rapport à la position du conducteur et au sens de marche du véhicule matérialisé par une flèche S sur la figure 1.

Le véhicule 1 comprend des ouvertures latérales 9, ici au nombre de deux, permettant d'accéder à l'intérieur de la caisse 3.

Chaque ouverture 9 peut être fermée à l'aide d'une porte latérale 11 correspondante. Chaque porte latérale 11 est mobile entre une position fermée dans laquelle elle occulte l'ouverture 9 correspondante (traits pleins) et une position ouverte dans laquelle elle est dégagée de l'ouverture 9 correspondante (traits pointillés). Les portes latérales 11 sont sensiblement symétriques par rapport à un plan longitudinal médian du véhicule 1. Seule une porte latérale droite et sa liaison à la caisse 3 seront décrites en détail par la suite.

Comme illustré sur la figure 2, la porte latérale 11 droite est montée coulissante sur la caisse 3 par l'intermédiaire de rails 15, 17, 19 sensiblement horizontaux et parallèles.

Les rails 15, 17, 19 sont par exemple au nombre de trois, à savoir un rail inférieur 15 disposé le long d'un bord inférieur de l'ouverture 9, un rail supérieur 17 disposé le long d'un bord supérieur de l'ouverture 9, et un rail arrière 19 disposé sur la surface extérieure d'une aile arrière droite de la caisse 3 et s'étendant depuis un bord vertical arrière de l'ouverture 9 vers l'arrière du véhicule 1.

La porte latérale 11 est montée sur les rails 15, 17 et 19 au moyen d'organes de guidage 21 similaires.

Chaque organe de guidage 21 est fixé sur une face intérieure de la porte latérale 11 et est reçu à coulissement sur le rail 15, 17, 19 correspondant.

Seule la liaison entre la porte latérale 11 droite et le rail inférieur 15 sera décrite en détail par la suite.

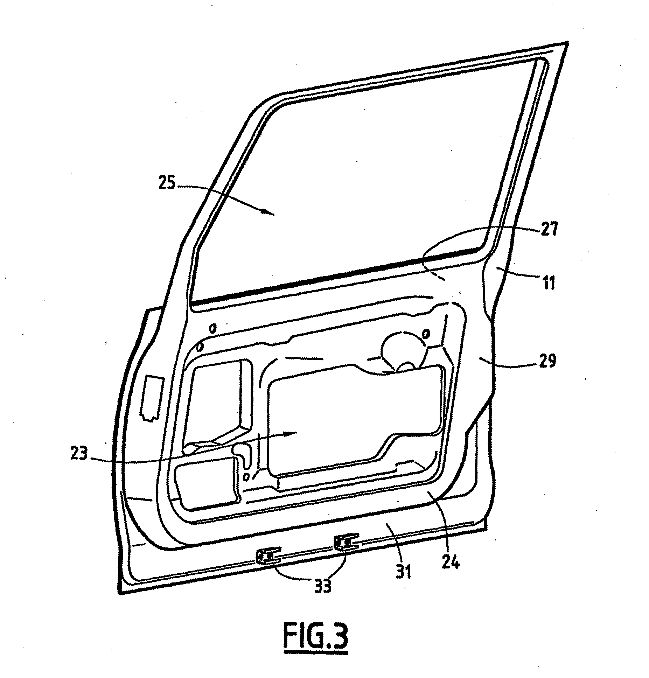

Comme cela est visible sur la figure 3, la porte latérale 11 droite comprend une partie inférieure 23 pleine et une partie supérieure 25 munie d'une ouverture destinée à recevoir une vitre (non représentée).

La partie inférieure 23 est formée par une tôle extérieure 27 et une tôle intérieure 29 fixées l'une sur l'autre à leur périphérie. La partie inférieure 23 présente une région centrale épaisse 24, dans laquelle les tôles 27, 29 sont espacées, et des bords périphériques minces au niveau desquels la tôle intérieure 29 se rapproche de la tôle extérieure 27.

, Un bord périphérique inférieur 31 porte du côté intérieur des organes de retenue 33, ici au nombre de deux et espacés longitudinalement le long du bord périphérique inférieur 31.

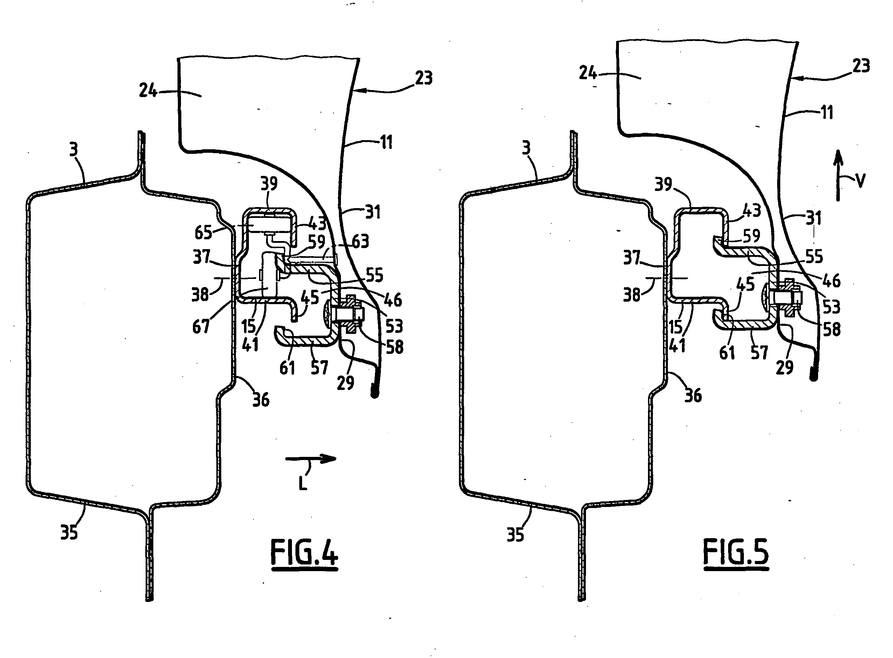

Comme illustré sur la figure 4, le bord inférieur de l'ouverture 9 droite est formé par un longeron 35 de la caisse 3.

Dans la suite de la description, la porte latérale 11 droite et sa liaison sur la caisse 3 sont décrites en prenant comme référence la position fermée de la porte.

La porte latérale 11 droite est disposée en travers de l'ouverture 9 de façon que la région centrale épaisse 24 se situe sensiblement au-dessus du longeron 35 et que le bord périphérique inférieur 31 s'étend vers le bas en masquant latéralement le longeron 35. Le bord périphérique inférieur 31 se situe en regard d'une surface latérale 36 du longeron 35 orientée vers l'extérieur du véhicule.

Le rail inférieur 15 est fixé le long de la surface latérale 36. La direction d'extension du rail 15 est perpendiculaire au plan de la figure 4.

Le rail 15 présente un profil à section en C ouvert en direction du bord périphérique inférieur 31. Plus précisément, le rail 15 comprend une âme centrale verticale 37 fixée sur le longeron 35, et des ailes latérales supérieure 39 et inférieure 41 parallèles, s'étendant en direction du bord périphérique inférieur 31. L'âme centrale 37 est fixée sur le longeron 35 à l'aide de boulons, comme illustré par le trait mixte 38. L'aile supérieure 39 comprend à son extrémité libre un premier rebord supérieur 43 s'étendant verticalement vers le bas en direction de l'aile inférieure 41. L'aile inférieure 41 est munie à son extrémité libre d'un deuxième rebord inférieur 45 s'étendant vers le bas en direction opposée de l'aile supérieure 39. L'ouverture latérale 46 du rail 15 est délimitée entre le rebord supérieur 43 et l'aile inférieure 41.

L'organe de retenue 33 comprend une base 53 fixée sur le bord périphérique inférieur 31 et deux crochets supérieur 55 et inférieur 57 s'étendant à partir de la base 53 en direction du rail 15. Les crochets 55, 57 sont tournés de la périphérie vers l'intérieur de la porte latérale 11. Les crochets supérieur 55 et inférieur 57 sont destinés à venir en prise respectivement avec les rebords supérieur 43 et inférieur 45 du rail 15. La base 53 est fixée sur la tôle intérieure 29 à l'aide de boulons 58.

Plus spécifiquement, l'organe de retenue 33 présente en section un profil en C ouvert vers le rail 15, avec deux branches latérales s'étendant à partir de la base 53 en direction du rail 15, chaque branche formant un crochet 55, 57. Les crochets 55, 57 sont munis aux extrémités libres de leurs branches de saillies 59, 61 d'accrochage dirigées vers l'intérieur de la porte latérale 11. La saillie 59 du crochet supérieur 55 s'étend vers le haut, du côté opposé au crochet inférieur 57. La saillie 61 du crochet inférieur 57 s'étend vers le haut en direction du crochet supérieur 55.

Les crochets supérieur 55 et inférieur 57 s'étendent respectivement sous les ailes supérieure 41 et inférieur 43 du rail 15. Le crochet supérieur 55 s'étend à travers l'ouverture latérale 46 du rail 15 et pénètre dans ce dernier. Les crochets 55, 57 s'étendent latéralement au-delà des rebords 43,45.

L'organe de retenue 33 et le rail 15 sont décalés verticalement de façon que l'organe 33 puisse se déplacer transversalement au rail 15, suivant une direction latérale illustrée par la flèche L, sans que les crochets 55, 57 ne viennent heurter les rebords 43, 45 des ailes 39, 41 du rail 15.

Ceci permet de ne pas entraver le mouvement de la porte 11 entre sa position fermée et sa position ouverte et réciproquement.

En effet, comme cela est illustré sur la figure 1 par la flèche F, lors de ses mouvements entre la position fermée et la position ouverte, la porte 11 effectue un mouvement combiné de translation latérale vers la droite et de translation longitudinale vers l'arrière. L'organe de retenue 33 accompagne le mouvement de la porte latérale 11 droite et se déplace latéralement relativement au rail 15.

En fonction de la course du déplacement latéral de la porte latérale 11 droite, en position ouverte complètement de celle-ci, l'organe de retenue 33 reste en partie en saillie dans le rail 15, ou est dégagé complètement du rail 15.

Comme illustré sur la figure 1, pour permettre le mouvement latéral de la porte latérale 11, un rail 15, 17, 19 présente par exemple à son extrémité avant un tronçon 50 recourbé latéralement vers l'intérieur. En variante, un organe de guidage 21 est fixé sur la porte latérale 11 droite au moyen d'un bras articulé (non représenté) permettant un déplacement latéral de la porte latérale 11 relativement à l'organe de guidage avec une course déterminée.

L'organe de guidage 21 inférieur est décalé longitudinalement le long du bord périphérique inférieur 31 par rapport à l'organe de retenue 33, et ne se situe pas dans le plan de la figure 4. En vue de la description, l'organe de guidage 21 inférieur a été représenté sur la figure 4 en traits mixtes.

L'organe de guidage 21 inférieur comprend un chariot 63 fixé sur la face intérieure du bord périphérique inférieur 31. Le chariot 63 s'étend à travers l'ouverture latérale 46 du rail 15, et comprend deux bras, à savoir un premier bras portant un premier galet 65 de guidage latéral disposé à rotation autour d'un axe vertical, et un second bras portant un second galet 67 de guidage vertical disposé à rotation suivant un axe sensiblement horizontal perpendiculaire à la direction d'extension du rail 15.

Le second galet 67 est en appui sur la surface supérieur de l'aile inférieure 41 formant une surface d'appui vertical. Le premier galet 65 se situe transversalement entre l'âme 37 et le rebord supérieur 43 du rail 15, dont les surfaces en regard forment un chemin de guidage.

Comme illustré sur la figure 5, en cas d'impact subi par la porte latérale 11 du véhicule, la porte latérale 11 se déforme et est entraînée latéralement vers l'intérieur du véhicule. Ce faisant, les régions périphériques de la porte 11 venant en appui sur les bords de l'ouverture 9, tendent à se contracter vers l'intérieur de la porte latérale 11.

En particulier, le bord inférieur 31 tend à se déplacer vers le haut selon une direction verticale illustrée par la flèche V sur la figure 5. Par conséquent, lors d'un choc subi par la porte 11, l'organe de retenue 33, initialement espacé du rail 15, est déplacé vers le haut sensiblement suivant la direction verticale V. Ses crochets 55, 57 viennent en prise avec les rebords 43, 45 du rail 15, et s'arriment de façon ferme et rigide sur le rail 15.

Par conséquent, l'organe de retenue 33 et le rail 15 coopèrent pour retenir la porte 11 par rapport à la caisse 3. Ce faisant, l'intrusion de la porte latérale 11 dans l'habitacle 5 est limitée.

L'organe de retenue 33 est donc apte à se déplacer latéralement suivant la direction latérale L par rapport au rail 15 pour permettre l'ouverture et la fermeture de la porte latérale 11 droite, tout en étant apte à venir en prise avec le rail 15 en cas de déplacement suivant la direction verticale V. La direction verticale V est transversale à la direction d'extension du rail 15. La direction latérale L est transversale à la direction verticale V et à la direction d'extension du rail 15.

L'utilisation du rail 15 pour coopérer avec l'organe de retenue 33 permet de limiter un surpoids trop important.

Par ailleurs, les organes de guide 21 contribuent aussi en cas de choc à retenir la porte latérale 11 sur le rail 15 et donc la caisse 3. Les organes de retenue 33 assurent un maintien supplémentaire, ce qui permet de limiter.

Le nombre d'organes de retenue 33 n'est pas limité à deux et peut être augmenté en fonction de la résistance souhaitée.

Avantageusement, un ou plusieurs organes de retenue 33 sont disposés de façon similaire sur un bord périphérique supérieur de la porte latérale 11 et sont aptes à coopérer avec le rail supérieur 17. De tels organes de retenues 33 sont disposés de façon à orienter leurs crochets 55, 57 vers l'intérieur de la porte latérale 11, c'est-à-dire dans ce cas vers le bas.

L'invention s'applique à toute porte coulissante et pas uniquement aux portes latérales, quelque soit la direction de coulissement de la porte par rapport au véhicule.

## Revendications

1. Véhicule automobile comprenant :
- une caisse (3) présentant une ouverture (9) d'accès à l'intérieur du véhicule ;
- une porte (11) permettant de fermer l'ouverture (9) d'accès, la porte étant montée à coulissement sur la caisse (3) entre une position fermée et une position ouverte,
- la porte étant montée à coulissement par l'intermédiaire d'un rail (15) et d'au moins un organe de guidage (21) apte à coulisser le long du rail (15) suivant la direction d'extension du rail (15), le rail (15) étant solidaire de l'une de la caisse (3) et de la porte (11), et l'organe de guidage étant solidaire de l'autre de la caisse (3) et de la porte (11) ;
**caractérisé en ce qu'**il comprend :
- un organe de retenue (33) fixé sur l'élément parmi la caisse et la porte portant l'organe de guidage (21),
- l'organe de retenue (33) étant apte, en position fermée de la porte (11), à venir en prise avec le rail (15) pour retenir la porte (11) par rapport à la caisse (3) lors de la déformation de la porte (11) selon une première direction (V) transversale à la direction d'extension du rail en cas d'impact subi par la porte ;
- l'organe de retenue (33) étant espacé du rail (15) lorsque la porte (11) n'est pas déformée, et apte à se déplacer par rapport au rail (15) selon une deuxième direction (L) sensiblement transversale à la direction d'extension du rail et à la première direction (V) pour permettre l'ouverture et la fermeture de la porte (11).

2. Véhicule selon la revendication 1, **caractérisé en ce que** l'organe de retenue (33) présente au moins un crochet (55, 57) apte à s'accrocher sur un bord (43, 45) du rail (15).

3. Véhicule selon la revendication 2, **caractérisé en ce que** le crochet (55, 57) comprend une branche s'étendant, en position fermée de la porte, en direction du rail (15), la branche comprenant au moins une saillie d'accrochage (59, 61) susceptible de s'accrocher sur le bord du rail (15).

4. Véhicule selon l'une quelconque des revendications précédentes, **caractérisé en ce que** l'organe de retenue (33) est fixé sur la périphérie de la porte (11).

5. Véhicule selon l'une quelconque des revendications précédentes, **caractérisé en ce que** l'organe de retenue (33) est agencé pour empêcher un mouvement de la périphérie de la porte (11) vers l'intérieur de la porte (11).

6. Véhicule selon l'une quelconque des revendications précédentes, **caractérisé en ce que** le rail (15) comprend au moins une aile (39, 41) s'étendant, en position fermée de la porte, en direction l'organe de retenue (33), l'aile (39, 41) étant munie à son extrémité libre d'un rebord (43, 45) sur lequel l'organe de retenue (33) est susceptible de s'accrocher.

7. Véhicule selon l'une quelconque des revendications précédentes, **caractérisé en ce que** le rail (15) présente un profil ouvert en direction de la porte (11), et, en position fermée de la porte, l'organe de retenue (33) s'engage au moins en partie à l'intérieur du rail (15).

## Claims

1. Motor vehicle comprising:
- a bodyshell (3) that has an opening (9) for accessing the interior of the vehicle;
- a door (11) for closing the access opening (9), the door being slidably mounted on the bodyshell (3) such that it can slide between a closed position and an open position,
- the door being slidably mounted via a rail (15) and at least one guide member (21) capable of sliding along the rail (15) in the direction in which the rail (15) extends, the rail (15) being secured to either the bodyshell (3) or the door (11), and the guide member being secured to either the door (11) or the bodyshell (3), respectively;
**characterized in that** it comprises:
- a retaining member (33) fixed to that element that is either the bodyshell or the door, that bears the guide member (21),
- the retaining member (33) being able, when the door (11) is in the closed position, to engage with the rail (15) in order to retain the door (11) relative to the bodyshell (3) in the event of deformation of the door (11) in a first direction (V) transverse to the direction in which the rail extends should the door experience an impact;
- the retaining member (33) being spaced away from the rail (15) when the door (11) is not deformed and being able to move relative to the rail (15) in the second direction (L) substantially transverse to the direction in which the rail extends and to the first direction (V) so as to allow the door (11) to be opened and closed.

2. Vehicle according to Claim 1, **characterized in that** the retaining member (33) has at least one hook (55, 57) able to hook onto an edge (43, 45) of the rail (15) .

3. Vehicle according to Claim 2, **characterized in that** the hook (55, 57) has a branch which, when the door is in the closed position, extends in the direction of the rail (15), the branch comprising at least one hooking projection (59, 61) capable of hooking onto the edge of the rail (15).

4. Vehicle according to any one of the preceding claims, **characterized in that** the retaining member (33) is fixed to the periphery of the door (11).

5. Vehicle according to any one of the preceding claims, **characterized in that** the retaining member (33) is designed to prevent any movement of the periphery of the door (11) towards the interior of the door (11).

6. Vehicle according to any one of the preceding claims, **characterized in that** the rail (15) comprises at least one flange (39, 41) which, when the door is in the closed position, extends in the direction of the retaining member (33), the flange (39, 41) being equipped at its free end with a lip (43, 45) onto which the retaining member (33) can hook.

7. Vehicle according to any one of the preceding claims, **characterized in that** the rail (15) has a profile which is open in the direction of the door (11) and, when the door is in the closed position, the retaining member (33) hooks at least partially inside the rail (15).

## Patentansprüche

1. Kraftfahrzeug mit:
- einem Fahrzeugaufbau (3), der eine Zugangsöffnung (9) zum Inneren des Fahrzeugs aufweist;
- einer Tür (11), die es erlaubt, die Zugangsöffnung (9) zu verschließen, wobei die Tür auf dem Fahrzeugaufbau (3) gleitend zwischen einer geschlossenen und einer offenen Position montiert ist,
- wobei die Tür gleitend über eine Schiene (15) und mindestens ein Führungsorgan (21), das entlang der Schiene (15) entlang der Ausdehnungsrichtung der Schiene (15) gleiten kann, montiert ist, wobei die Schiene (15) entweder mit dem Fahrzeugaufbau (3) oder mit der Tür (11) fest verbunden ist, und das Führungsorgan fest entweder mit dem Fahrzeugaufbau (3) oder der Tür (11) verbunden ist;
**dadurch gekennzeichnet, dass** es Folgendes aufweist:
- ein Rückhalteorgan (33), das auf dem Element das das Führungsorgan (21) trägt, nämlich entweder dem Fahrzeugaufbau oder der Tür befestigt ist,
- wobei das Rückhalteorgan (33) in geschlossener Position der Tür (11) mit der Schiene (15) zum Eingreifen kommen kann, um die Tür (11) in Bezug auf den Fahrzeugaufbau (3) beim Verformen der Tür (11) entlang einer ersten Richtung (V) quer zu der Ausdehnungsrichtung der Schiene bei einem von der Tür erlittenen Aufprall zurückzuhalten;
- wobei das Rückhalteorgan (33) von der Schiene (15) beabstandet ist, wenn die Tür (11) nicht verformt ist, und sich in Bezug auf die Schiene (15) entlang einer zweiten Richtung (L), die im Wesentlichen quer zu der Ausdehnungsrichtung der Schiene und zu der ersten Richtung (V) ist, bewegen kann, um das Öffnen und das Schließen der Tür (11) zu erlauben.

2. Fahrzeug nach Anspruch 1, **dadurch gekennzeichnet, dass** das Rückhalteorgan (33) mindestens einen Haken (55, 57) aufweist, der sich auf dem Rand (43, 45) der Schiene (15) anhängen kann.

3. Fahrzeug nach Anspruch 2, **dadurch gekennzeichnet, dass** der Haken (55, 57) einen Schenkel aufweist, der sich in geschlossener Stellung der Tür in Richtung der Schiene (15) erstreckt, wobei der Schenkel mindestens einen Anhängvorsprung (59, 61) aufweist, der sich an dem Rand der Schiene (15) anhängen kann.

4. Fahrzeug nach einem der vorhergehenden Ansprüche, **dadurch gekennzeichnet, dass** das Rückhalteorgan (33) auf dem Umfang der Tür (11) befestigt ist.

5. Fahrzeugs nach einem der vorhergehenden Ansprüche, **dadurch gekennzeichnet, dass** das Rückhalteorgan (33) eingerichtet ist, um eine Bewegung des Umfangs der Tür (11) zum Inneren der Tür (11) zu verhindern.

6. Fahrzeug nach einem der vorhergehenden Ansprüche, **dadurch gekennzeichnet, dass** die Schiene (15) mindestens eine Rippe (39, 41) aufweist, die sich in geschlossener Stellung der Tür in Richtung des Rückhalteorgans (33) erstreckt, wobei die Rippe (39, 41) an ihrem freien Ende mit einer Kante (43, 45) versehen ist, auf der sich das Rückhalteorgan (33) anhängen kann.

7. Fahrzeug nach einem der vorhergehenden Ansprüche, **dadurch gekennzeichnet, dass** die Schiene (15) ein in Richtung der Tür (11) offenes Profil aufweist, und dass das Rückhalteorgan (33) in geschlossener Stellung der Tür zumindest teilweise in das Innere der Schiene (15) eingreift.
